# EUROPÄISCHE PATENTSCHRIFT

(11) **EP 3 663 030 B1**
(45) Veröffentlichungstag und Bekanntmachung des Hinweises auf die Patenterteilung: **18.05.2022**
(21) Anmeldenummer: 18210956.1
(22) Anmeldetag: 07.12.2018
(51) Int. Cl.: B23K 26/03, B23K 9/095, G01P 3/36

(54) **SYSTEM UND VERFAHREN ZUR BESTIMMUNG EINER SCHWEISS- ODER LÖTGESCHWINDIGKEIT**
METHOD AND SYSTEM FOR DETERMINING A WELDING OR SOLDERING SPEED
SYSTÈME ET PROCÉDÉ DE DÉTERMINATION D'UNE VITESSE DE SOUDAGE OU DE BRASAGE

(43) Veröffentlichungstag der Anmeldung: 10.06.2020
(73) Patentinhaber: EWM AG, 56271 Mündersbach (DE); BIAS Bremer Institut für angewandte Strahltechnik GmbH, 28359 Bremen (DE)
(72) Erfinder: Bergmann, Ralf, 28359 Bremen (DE); Szczesny, Michael, 56271 Mündersbach (DE)
(74) Vertreter: Cohausz & Florack

(56) Entgegenhaltungen:
- EP-A1- 2 292 363
- JP-A- H0 450 704
- JP-A- 2000 275 011

## Beschreibung

Die Erfindung betrifft ein System und ein Verfahren zur Bestimmung einer Schweiß-oder Lötgeschwindigkeit.

Bei nicht automatisierten Schweiß- oder Lötprozessen ist die Einhaltung der Schweiß- bzw. Lötgeschwindigkeit in der Regel besonders kritisch für die Qualität des Prozesses. Im Folgenden bezieht sich die Beschreibung der Einfachheit halber auf Schweißprozesse, gilt jedoch für Lötprozesse entsprechend. Bei automatisierten Schweißprozessen ist die Schweißgeschwindigkeit anhand des Verfahrwegs des Schweißkopfes bzw. der Erfassung der Relativbewegung des Werkstücks gegenüber dem Schweißkopf leicht nachvollziehbar, so dass man die Schweißgeschwindigkeit zum Beispiel zur Regelung des Schweißstroms und damit auch der Schweißqualität verwenden kann. Beim Handschweißen ist die Schweißgeschwindigkeit hingegen nicht ohne weiteres messbar, so dass sich die Streckenenergie (d.h. die eingebrachte Energie pro Strecke) E_{Str} = P/v, die durch die Leistung P und die Schweißgeschwindigkeit v bestimmt wird, nicht zufriedenstellend regeln lässt.

Es sind bereits verschiedene Ansätze bekannt, um die Schweißgeschwindigkeit zu bestimmen.

Beispielsweise wird in der DE 10 2007 036 505 A1 ein Verfahren beschrieben, bei dem der Schweißprozess mittels einer Kamera beobachtet wird und durch Auswertung der erfassten Bilddaten die Schweißgeschwindigkeit bestimmt wird. Dieses Verfahren erfordert jedoch eine ausreichend strukturierte Werkstückoberfläche oder die Anbringung von Markierungen auf den zu verbindenden Werkstücken.

Weiterhin ist aus der EP 1 077 784 B1 ein Verfahren bekannt, bei dem die Schweißgeschwindigkeit mittels Widerstandsbrücke bestimmt wird. Dieses Verfahren ist jedoch wegen der anzubringenden Messkontakte sehr aufwändig und erfordert wegen der großen Temperaturschwankungen während des Schweißprozesses eine sehr hohe Messgenauigkeit.

Weiterhin beschreibt DD 142 677 A1 ein Verfahren, mit dem die Relativbewegung eines Werkstücks gegenüber dem Schweißbrenner ermittelt werden kann. Dieses Messverfahren ist bei rein manuellen Schweißverfahren jedoch nicht anwendbar.

Die EP 2 292 363 A1 bildet die Grundlage für den Oberbegriff der Ansprüche 1 und 10 und beschreibt ein Verfahren und eine Vorrichtung zum Ermitteln einer Schweiß- oder Lötgeschwindigkeit mittels eines GPS-Systems.

Vor diesem Hintergrund liegt der vorliegenden Erfindung die Aufgabe zu Grunde, ein System und ein Verfahren zur Verfügung zu stellen, mit denen sich die Schweiß- oder Lötgeschwindigkeit, insbesondere auch beim Handschweißen oder Handlöten, einfach und zuverlässig messen lässt.

Diese Aufgabe wird erfindungsgemäß gelöst durch ein System gemäß dem Anspruch 1.

Es wurde erkannt, dass sich mit einem solchen System die Schweiß- oder Lötgeschwindigkeit bei Durchführung eines Schweiß- bzw. Lötverfahrens mit einem Gerät, insbesondere Handgerät, zum Schweißen bzw. Löten auf einfache Weise zuverlässig messen lässt.

Entsprechend wird die oben genannte Aufgabe weiterhin gelöst durch die Verwendung des zuvor beschriebenen Systems zum Bestimmen einer Schweiß- oder Lötgeschwindigkeit, insbesondere bei Durchführung eines Schweiß- bzw. Lötvorgangs mit einem Gerät, insbesondere Handgerät, zum Schweißen bzw. Löten.

Das System kann vorzugsweise beim Metallschutzgasschweißen (MSG-Schweißen), insbesondere Metallaktivgasschweißen (MAG-Schweißen) oder Metallinertgasschweißen (MIG-Schweißen), beim Wolfram-Inertgasschweißen (WIG-Schweißen oder auch beim Elektro- oder Plasmaschweißen verwendet werden.

Verfahrensmäßig wird die oben genannte Aufgabe weiterhin gelöst durch ein Verfahren zur Bestimmung einer Schweiß- oder Lötgeschwindigkeit, insbesondere unter Verwendung des zuvor beschriebenen Systems, bei dem eine Werkstückoberfläche mit Licht beleuchtet wird, das ausreichend kohärent ist, um Speckle-Muster zu erzeugen, bei dem Speckle-Muster des von der Werkstückoberfläche zurückreflektierten Lichts erfasst werden und bei dem aus den erfassten Speckle-Mustern eine Schweiß- oder Lötgeschwindigkeit berechnet wird. das zuvor beschriebene Verfahren kann insbesondere beim Handschweißen oder Handlöten verwendet werden.

Das System und das Verfahren nutzen die bei Beleuchtung einer Werkstückoberfläche mit hinreichend kohärentem Licht entstehenden Speckle-Muster zur Messung der Schweiß- bzw. Lötgeschwindigkeit. Ein vergleichbares Prinzip ist grundsätzlich aus dem Bereich der Laser-Computermäuse bekannt, bei denen ein mit einem Laserstrahl erzeugtes Speckle-Muster erfasst wird, um die Mausbewegung über eine Oberfläche zu erfassen. Es wurde festgestellt, dass sich dieses Prinzip in vorteilhafter Weise auf die Messung einer Schweiß- oder Lötgeschwindigkeit übertragen lässt.

Die Anforderungen an die Werkstückoberfläche zur Messung der Schweiß- bzw. Lötgeschwindigkeit sind sehr gering. Insbesondere ist es nicht erforderlich, dass die Werkstückoberfläche besonders stark strukturiert ist oder Markierungen aufweist. Es ist lediglich erforderlich, dass die Werkstückoberfläche in Bezug auf den Wellenlängenbereich des verwendeten Lichts nicht perfekt spiegelnd ist (d.h. keine gegenüber der Wellenlänge des verwendeten Lichts sehr kleine Rauhigkeit aufweist), sondern eine gewisse Rauhigkeit aufweist, so dass das kohärente Licht, mit dem die Werkstückoberfläche bestrahlt wird, Speckle-Muster erzeugt. In Versuchen wurde festgestellt, dass diese Anforderung bei metallischen technischen Werkstückoberflächen im Allgemeinen erfüllt ist.

Die Schweiß- oder Lötgeschwindigkeit wird aus den erfassten Speckle-Mustern bestimmt. Zu diesem Zweck werden insbesondere mehrere Speckle-Muster nacheinander erfasst. Anhand der nacheinander erfassten Speckle-Muster kann zur Bestimmung der Schweiß- oder Lötgeschwindigkeit zum Beispiel eine Verschiebung eines Speckle-Muster-Ausschnitts bestimmt werden. Die Analyse der Speckle-Muster kann insbesondere eine Korrelation mehrerer Speckle-Muster oder Autokorrelationen von Speckle-Mustern umfassen.

Die Bestimmung einer Geschwindigkeit anhand von Speckle-Mustern ist grundsätzlich aus dem technischen Bereich von Laser-Computermäusen bekannt und muss daher an dieser Stelle nicht im Einzelnen erläutert werden.

Das System und das Verfahren dienen zur Bestimmung einer Schweiß- oder Lötgeschwindigkeit. Unter der Schweiß- oder Lötgeschwindigkeit wird insbesondere die Relativgeschwindigkeit zwischen dem zum Schweißen bzw. Löten verwendeten Gerät (z.B. Schweiß- oder Lötkopf), insbesondere Handgerät (z.B. Schweißbrenner oder Lötkolben), und der Werkstückoberfläche eines zu fügenden Werkstücks verstanden.

Entsprechend ist die Detektionseinrichtung zur Montage an ein Gerät, insbesondere Handgerät, zum Schweißen oder Löten oder zur Integration in ein Gerät, insbesondere Handgerät, zum Schweißen oder Löten eingerichtet. Beispielsweise kann die Detektionseinrichtung als Aufsatz für ein Gerät, insbesondere Handgerät, zum Schweißen oder Löten ausgebildet sein, mit der sich ein Gerät, insbesondere Handgerät, zum Schweißen oder Löten bei dessen Herstellung oder im Nachhinein ausrüsten lässt. Zu diesem Zweck kann die Detektionseinrichtung insbesondere Montagemittel zur Montage der Detektionseinrichtung an ein Gerät, insbesondere Handgerät, aufweisen. Weiterhin kann die Detektionseinrichtung auch direkt in das Gerät, insbesondere Handgerät, integriert sein, beispielsweise in den Griff des Handgeräts.

Unter einem Gerät zum Schweißen oder Löten wird insbesondere ein Schweiß- oder Lötkopf, wie zum Beispiel für einen Schweiß- oder Lötroboter, verstanden oder insbesondere ein Handgerät zum Schweißen oder Löten.

Ein Handgerät zum Schweißen oder Löten dient zur manuellen Durchführung eines Schweiß- oder Lötvorgangs, wobei das Handgerät von der Hand des Schweißers geführt wird. Unter einem Handgerät zum Schweißen wird insbesondere ein Schweißbrenner verstanden. Unter einem Handgerät zum Löten wird insbesondere ein Lötbrenner oder Lötkolben verstanden.

Die Berechnungseinrichtung des Systems kann ebenfalls an das Gerät, insbesondere Handgerät, montiert oder in das Gerät, insbesondere Handgerät, integriert sein. Insbesondere können die Berechnungseinrichtung und die Detektionseinrichtung als gemeinsame Einheit, beispielsweise in einem gemeinsamen Gehäuse, ausgebildet sein. Alternativ ist es aber auch denkbar, die Berechnungseinrichtung separat von der Detektionseinrichtung vorzusehen, beispielsweise integriert in eine Schweißkomponente, mit der das Gerät, insbesondere Handgerät, verbunden ist, wie zum Beispiel in eine Schweißstromquelle.

Wenn die Berechnungseinrichtung separat von der Detektionseinrichtung angeordnet ist, so ist insbesondere eine Datenleitung zwischen der Detektionseinrichtung und der Berechnungseinrichtung vorgesehen, um die von der Erfassungseinrichtung erfassten Speckle-Muster an die Berechnungseinrichtung zu übermitteln.

Im Folgenden werden verschiedene Ausführungsformen des Systems, der Verwendung und des Verfahrens beschrieben, wobei die einzelnen Ausführungsformen jeweils unabhängig für das System, die Verwendung und das Verfahren anwendbar sind. Weiterhin können die einzelnen Ausführungsformen auch untereinander kombiniert werden.

Bei einer Ausführungsform ist die Beleuchtungseinrichtung zur Beleuchtung einer Werkstückoberfläche mit Laserlicht eingerichtet. Bei einer entsprechenden Ausführungsform des Verfahrens wird die Werkstückoberfläche mit Laserlicht beleuchtet. Laserlicht weist eine ausreichende Kohärenz auf, um zuverlässig ein kontrastreiches Speckle-Muster zu erzeugen.

Bei einer weiteren Ausführungsform ist die Beleuchtungseinrichtung zur Beleuchtung einer Werkstückoberfläche mit Licht einer Wellenlänge im sichtbaren oder an den sichtbaren angrenzenden Bereich, vorzugsweise im Bereich von 450 nm bis 680 nm, weiter bevorzugt von 500 nm bis 650 nm, eingerichtet. Bei einer entsprechenden Ausführungsform des Verfahrens hat das Licht eine Wellenlänge im sichtbaren oder an den sichtbaren angrenzenden Bereich, vorzugsweise im Bereich von 450 nm bis 680 nm, weiter bevorzugt von 500 nm bis 650 nm. Es hat sich gezeigt, dass die Störeinflüsse durch die Lichtemission eines Schweißprozesses in diesem Wellenlängenbereich vergleichsweise gering sind.

Lötprozesse und insbesondere Schweißprozesse mittels Lichtbogen erzeugen ein breites intensives Spektrum optischer Emission, dass das Erfassen und Auswerten von Speckle-Mustern erschweren oder verhindern kann. Es wurde festgestellt, dass viele Lichtbogenschweißprozesse im Bereich des sichtbaren Lichts oder des unmittelbar daran angrenzenden Wellenlängenbereichs, insbesondere von 450 nm bis 680 nm, vorzugsweise 500 nm bis 650 nm, eine vergleichsweise geringe Lichtemission erzeugen. Durch die Wahl des Lichts zur Erzeugung des Speckle-Musters in diesem Wellenlängebereich, lässt sich der Störeinfluss durch die Lichtemission des Schweißprozesses reduzieren.

Bei einer weiteren Ausführungsform weist die Detektionseinrichtung einen auf das Licht der Beleuchtungseinrichtung abgestimmten und vor der Erfassungseinrichtung angeordneten Farbfilter auf. Auf diese Weise wird das Licht gefiltert, bevor es von der Erfassungseinrichtung erfasst wird. Dadurch lässt sich Störlicht, insbesondere durch den Löt- oder Schweißprozess emittiertes Licht, aus anderen Wellenlängenbereichen abschirmen, so dass ein höheres Signal-Rausch-Verhältnis erreicht werden kann. Vorzugsweise wird ein Farbfilter verwendet, der einen Durchlassbereich im Wellenlängenbereich des Lichts der Beleuchtungseinrichtung aufweist und einen Sperrbereich bei größeren und/oder kleineren Wellenlängen. Bei dem Farbfilter handelt es sich vorzugsweise um einen schmalbandigen Filter, um den Anteil von Umgebungs- und Prozess-, insbesondere Schweißprozessleuchten möglichst weit zu verringern.

Bei einer weiteren Ausführungsform weist die Erfassungseinrichtung einen Bildsensor auf, insbesondere einen CCD-Sensor. Auf diese Weise kann ein räumlich ausgedehntes Speckle-Muster erfasst werden, wodurch die Schweiß- bzw. Lötgenauigkeit genauer bestimmt werden kann. Weiterhin kann auf diese Weise auch eine Bewegungsrichtung ermittelt werden.

Bei einer weiteren Ausführungsform weist die Detektionseinrichtung eine Laser-Optik auf, die dazu eingerichtet ist, die Position des Auftreffpunkts des Lichts auf der Werkstückoberfläche einzustellen. Zusätzlich oder alternativ kann die Detektionseinrichtung eine Abbildungs-Optik aufweisen, die dazu eingerichtet ist, den von der Erfassungseinrichtung erfassten Bereich der Werkstückoberfläche einzustellen. Auf diese Weise lässt sich der Auftreffpunkt bzw. der mit der Erfassungseinrichtung erfasste Bereich der Werkstückoberfläche an die jeweilige Prozessgeometrie bzw. an die jeweiligen Prozessbedingungen anpassen. Es kann auch eine für beide Zwecke eingerichtete Optik vorgesehen sein, d.h. eine Optik, die sowohl als Laser-Optik als auch als Abbildungs-Optik fungiert.

Um den dauerhaften Betrieb des Systems zu gewährleisten, kann eine Reinigung der Abbildungs-Optik und/oder der Laser-Optik erforderlich werden. Dies kann beispielsweise händisch erfolgen, etwa durch den Einsatz von Reinigungstüchern oder Reinigungsmitteln. Alternativ können auch automatische Reinigungsmittel zur Reinigung der Abbildungs- und/oder Laser-Optik vorgesehen sein, beispielsweise eine Reinigungsdüse, aus der ein Reinigungsmittel und/oder ein Gasstrahl, zum Beispiel ein Luftstrahl, austritt, um die Abbildungs- und/oder Laser-Optik zu reinigen. Zusätzlich oder alternativ kann auch ein auswechselbares, lichtdurchlässiges Schutzelement, beispielsweise eine Glasplatte oder eine Kunststofffolie, vor der Abbildungs- und/oder Laser-Optik angeordnet sein, um diese gegen Verunreinigungen, insbesondere durch das Schweißen bzw. Löten, zu schützen.

Bei einer weiteren Ausführungsform ist das System, vorzugsweise die Detektionseinrichtung, insbesondere die Berechnungseinrichtung, dazu eingerichtet, den Kontrast des Speckle-Musters zu überwachen und bei einem Abfall des Speckle-Muster-Kontrasts unter einen vorgegebenen Grenzwert die Ausgabe eines Hinweises an den Nutzer zu bewirken. Beispielsweise kann die Berechnungseinrichtung bei Abfall des Speckle-Muster-Kontrasts unter einen vorgegebenen Grenzwert die Ausgabe eines Signals bewirken, die eine angeschlossene Komponente, beispielsweise ein Handgerät zum Schweißen oder Löten oder ein daran angeschlossenes Schweißgerät, zur Ausgabe eines entsprechenden Hinweises über eine Nutzerschnittstelle veranlasst. Auf diese Weise kann der Benutzer auf den reduzierten Speckle-Muster-Kontrast bzw. auf eine ggf. erforderliche Reinigung der Abbildungs-und/oder Laser-Optik zur Verbesserung des Speckle-Muster-Kontrasts hingewiesen.

Die Abbildungs-Optik ist vorzugsweise derart einstellbar, dass sie eine scharfe Abbildung von Speckle-Mustern aus verschiedenen Abständen der Detektionseinrichtung zur Werkstückoberfläche erlaubt. Beispielsweise kann die Abbildungs-Optik eine einstellbare Brennweite aufweisen. Auf diese Weise kann der Arbeitsabstand an die jeweilige Schweißsituation angepasst werden. Insbesondere kann der Arbeitsabstand auf diese Weise hinreichend groß gewählt werden, um Ablagerungen auf der Abbildungs-Optik durch beim Schweißen bzw. Löten zu vermeiden.

Die Abbildungs-Optik ist vorzugsweise als sogenannte "Long distance"-Optik ausgebildet, beispielsweise als "Long distance"-Objektiv. Eine solche Optik kann das Speckle-Muster, ähnlich einer Tele-Optik bzw. einem Tele-Objektiv mit größerer Brennweite, von einer Werkstückoberfläche in hinreichender Distanz auf einen Sensor, insbesondere Bildsensor der Erfassungseinrichtung abbilden, so dass die Detektionseinrichtung in größerem Abstand von der Werkstückoberfläche positioniert werden kann, wodurch Verunreinigungen der Detektionseinrichtung, insbesondere der Optik, beim Schweißen oder Löten reduziert werden können. Die "Long distance"-Optik weist vorzugsweise eine Autofokus-Automatik auf, um auch bei größerem Abstand zur Werkstückoberfläche eine scharfe Abbildung des Speckle-Musters zu gewährleisten.

Bei einer weiteren Ausführungsform weist die Abbildungs-Optik eine Autofokus-Automatik auf, auf diese Weise kann eine scharfe Abbildung des Speckle-Patterns zur Erfassung durch die Erfassungseinrichtung erreicht werden.

Erfindungsgemäß umfasst das System weiter ein Gerät zum Schweißen oder Löten, insbesondere ein Handgerät zum Schweißen oder Löten, wobei die Detektionseinrichtung an dem Gerät, insbesondere Handgerät, montiert oder in dieses integriert ist. Durch die Kopplung von Detektionseinrichtung und Gerät, insbesondere Handgerät, kann die Schweiß- bzw. Lötgeschwindigkeit bei einem mit dem Gerät durchgeführten Schweiß- bzw. Lötvorgang bestimmt werden.

Bei einer weiteren Ausführungsform des Verfahrens wird die berechnete Schweiß-oder Lötgeschwindigkeit zur Steuerung eines Schweiß- bzw. Lötvorgangs verwendet.

Durch das Verfahren bzw. das System lässt sich die Schweiß- bzw. Lötgeschwindigkeit zuverlässig bestimmen, so dass diese zur Steuerung eines Schweiß- bzw. Lötprozesses verwendet werden kann. Beispielsweise kann die Leistung abhängig von der berechneten Schweiß- oder Lötgeschwindigkeit eingestellt werden, zum Beispiel um den Energieeintrag in das Werkstück, insbesondere die Streckenenergie Estr konstant oder innerhalb eines vorgegebenen Bereichs zu halten.

Weitere Vorteile und Merkmale des Systems, der Verwendung und des Verfahrens ergeben sich aus der nachfolgenden Beschreibung von Ausführungsbespielen, wobei auf die beigefügte Zeichnung Bezug genommen wird.

In der Zeichnung zeigen
- Fig. 1: Ausführungsbeispiele des Systems und des Verfahrens,
- Fig. 2: ein Beispiel für ein Speckle-Muster,
- Fig. 3: ein Beispiel für das bei einem Schweißprozess emittierte Lichtspektrum
- Fig. 4: weitere Ausführungsbeispiele des Systems und des Verfahrens und
- Fig. 5: weitere Ausführungsbeispiele des Systems und des Verfahrens.

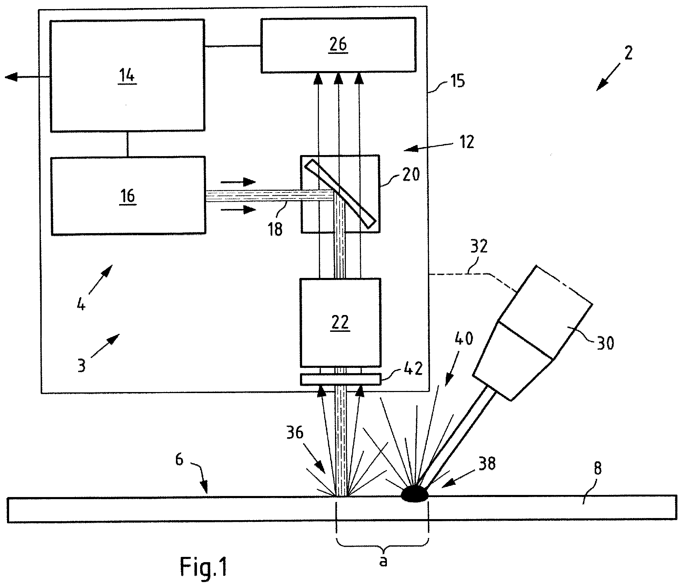

Fig. 1 zeigt Ausführungsbeispiele des Systems und des Verfahrens in schematischer Darstellung.

Das System 2 zur Bestimmung einer Schweiß- oder Lötgeschwindigkeit umfasst eine Detektionseinrichtung 3 mit einer Beleuchtungseinrichtung 4 zum Beleuchten einer Werkstückoberfläche 6 eines Werkstücks 8 mit Licht und einer optischen Erfassungseinrichtung 12 zum Erfassen des von der Werkstückoberfläche reflektierten Lichts sowie eine Berechnungseinrichtung 14, die beim vorliegenden Ausführungsbeispiel zusammen mit der Detektionseinrichtung 3 in ein gemeinsames Gehäuse 15 integriert ist.

Die Beleuchtungseinrichtung 4 weist eine Laserquelle 16 auf, beispielsweise eine Laserdiode, die einen kohärenten Laserstrahl 18 erzeugt, der über einen halbdurchlässigen Spiegel 20 und eine Optik 22 auf die Werkstückoberfläche 6 gerichtet wird.

Da die Werkstückoberfläche 6 eines technischen metallischen Werkstücks im Allgemeinen eine gewisse Oberflächenrauigkeit aufweist, wird der Laserstrahl 18 auf der Werkstückoberfläche 6 zumindest teilweise diffus reflektiert, so dass sich die an der Werkstückoberfläche 6 reflektierten Teilstrahlen des Laserstrahls 18 überlagern. Durch die Kohärenz des Laserstrahls 18 führt dies zur Entstehung von sogenannten Speckle-Mustern.

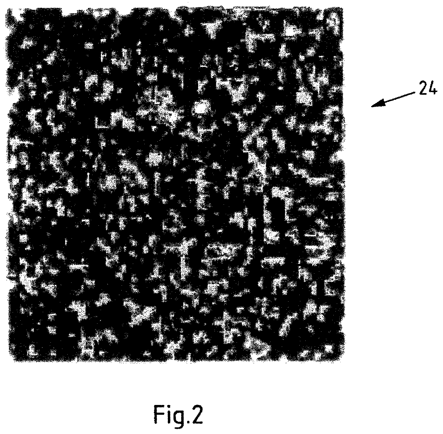

Fig. 2 zeigt ein Beispiel für ein solches Speckle-Muster. Das Speckle-Muster 24 weist eine charakteristische Körnigkeit auf, in der sich helle Bereiche (konstruktive Interferenz der reflektierten Teilstrahlen) und dunkle Bereiche (destruktive Interferenz der reflektierten Teilstrahlen) abwechseln.

Derartige Speckle-Muster werden durch die Optik 22 und den halbdurchlässigen Spiegel 20 auf die Erfassungseinrichtung 12 abgebildet, die im vorliegenden Beispiel einen CCD-Sensor 26 aufweist, der Bilddaten der darauf abgebildeten Speckle-Muster erfasst. Für eine scharfe Abbildung der Speckle-Muster weist die Optik 22 vorzugsweise eine Autofokus-Einheit auf.

Im vorliegenden Beispiel fungiert die Optik 22 sowohl als Laser-Optik als auch als Abbildungs-Optik.

Die Berechnungseinrichtung 14 berechnet aus den mit der Erfassungseinrichtung 12 erfassten Speckle-Mustern eine Schweiß- oder Lötgeschwindigkeit.

Das erfasste Speckle-Muster hängt sensitiv von dem beleuchteten Bereich der Werkstückoberfläche 6 ab. Eine Verschiebung des beleuchteten Bereichs der Werkstückoberfläche 6, zum Beispiel durch eine Bewegung des Werkstücks 8 oder der Detektionseinrichtung 3, führt zu einem anderen Speckle-Muster. Durch eine Auswertung nacheinander erfasster Speckle-Muster lässt sich daher die Relativgeschwindigkeit der Detektionseinrichtung 3 zur Werkstückoberfläche 6 berechnen, beispielsweise durch Korrelation der nacheinander erfassten Speckle-Muster miteinander. Die Berechnungseinrichtung 14 weist zu diesem Zweck entsprechende Mittel auf, um eine solche Auswertung der Speckle-Muster zur Berechnung einer Relativgeschwindigkeit durchzuführen. Die Mittel können in Form von Hardware, beispielsweise in Form eines digitalen Signalprozessors (DSP), wie er zum Beispiel bei Laser-Computermäusen eingesetzt wird, und/oder in Form von Software implementiert sein.

Die Detektionseinrichtung 3 ist an einem Handgerät 30 zum Schweißen oder Löten montiert. Dies ist in Fig. 1 hoch schematisch illustriert durch die Verbindung 32. In der Praxis kann die Detektionseinrichtung 3 beispielsweise als Aufsatz ausgebildet sein, die an dem Handgriff des Handgeräts 30 montiert ist Alternativ kann die Detektionseinrichtung 3 auch in das Handgerät 30 integriert sein.

Da die Detektionseinrichtung 3 an dem Handgerät 30 montiert ist, bewegt sich die Detektionseinrichtung 3 bei Bewegung des Handgeräts 30 mit, so dass über die Bestimmung der Relativgeschwindigkeit zwischen Detektionseinrichtung 3 und Werkstückoberfläche 6 die Relativgeschwindigkeit zwischen Handgerät 30 und Werkstückoberfläche 6 und damit die Schweiß- bzw. Lötgeschwindigkeit bestimmen lässt.

Die Optik 22 der Detektionseinrichtung 3 ist vorzugsweise einstellbar ausgebildet, um die Position des Laserstrahls 18 auf der Werkstückoberfläche 6 einstellen zu können, insbesondere den Abstand *a* zwischen der Position des Auftreffpunkts 36 des Laserstrahls auf der Werkstückoberfläche 6 zu der mit dem Handgerät 30 bearbeiteten Schweiß- oder Lötposition 38.

Da die Messung der Schweiß- bzw. Lötgeschwindigkeit während des laufenden Schweiß- oder Lötvorgangs ausgeführt wird, kann die durch den Schweiß- bzw. Lötvorgang hervorgerufene Lichtemission 40 die Erfassung der Speckle-Muster erschweren.

Um die Beeinträchtigung der Speckle-Muster-Erfassung durch die Lichtemission 40 zu reduzieren, wird vorzugsweise eine Laserquelle 16 gewählt, deren Frequenz in einem Bereich liegt, in dem die Lichtemission 40 durch das Löte bzw. Schweißen relativ gering ist.

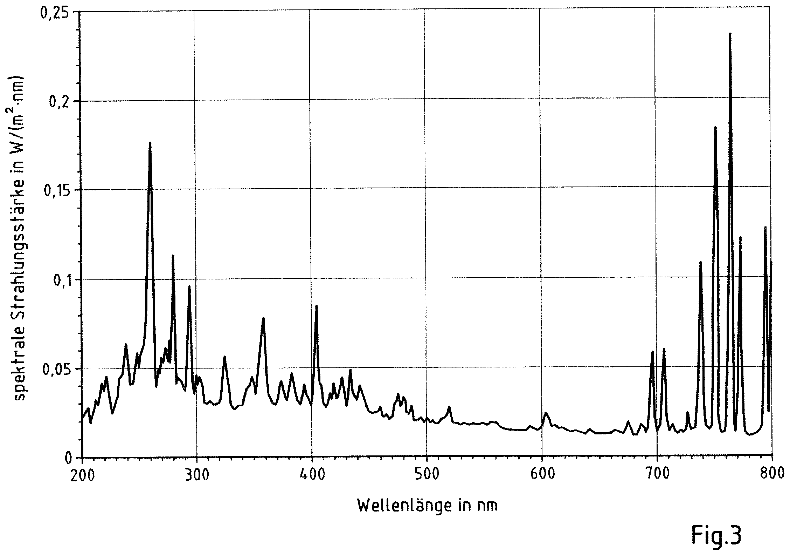

Fig. 3 zeigt ein typisches Lichtemissionsspektrum eines Schweißvorgangs. Die Abszisse zeigt die Wellenlänge in nm und die Ordinate die spektrale Strahlungsstärke in W/(m²·nm). Wie das Lichtemissionsspektrum zeigt, ist die Lichtemission im Bereich zwischen 450 und 680 nm, insbesondere 500 bis 650 nm, vergleichsweise gering. Daher wird vorzugsweise eine Laserquelle 16 mit einer Wellenlänge in diesem Bereich gewählt.

Weiterhin wird vorzugsweise ein wellenlängenselektiver, insbesondere schmalbandiger Filter 42 vorgesehen, der Licht der Wellenlänge der Laserquelle 16 passieren lässt und Licht anderer Wellenlängen, insbesondere mit einer Wellenlänge kleiner 450 nm und oder größer 680 nm abblockt.

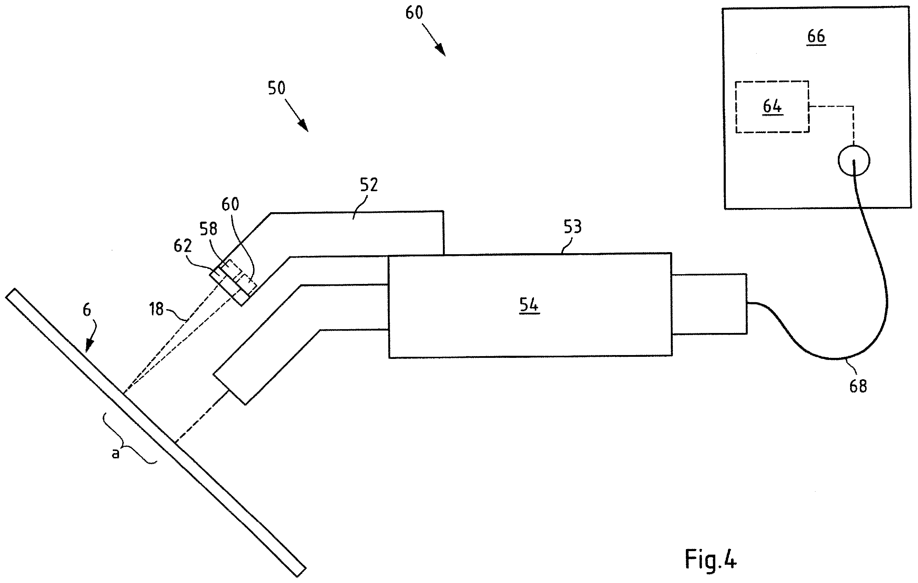

Fig. 4 zeigt weitere Ausführungsbeispiele des Systems und des Verfahrens.

Das System 50 umfasst eine als Aufsatz ausgebildete Detektionseinrichtung 52, die an einem Handgriff 53 eines Handgeräts 54 zum Schweißen in Form eines Schweißbrenners montiert ist.

Die Detektionseinrichtung 52 umfasst eine Beleuchtungseinrichtung 58 zur Beleuchtung einer Werkstückoberfläche 6 mit kohärentem Licht 18, eine Erfassungseinrichtung 60 zum Erfassen eines Speckle-Musters und eine Optik 62 zum Abbilden des von der Beleuchtungseinrichtung 58 erzeugten Lichts auf der Werkstückoberfläche 6 und zum Abbilden des Speckle-Musters des von der Werkstückoberfläche 6 reflektierten Lichts auf die Erfassungseinrichtung 60. Die Optik 62 fungiert bei diesem Beispiel sowohl als Laser-Optik als auch als Abbildungs-Optik. Alternativ können auch zwei getrennte Optiken, eine separate Laser-Optik und eine Abbildungs-Optik, oder zum Beispiel auch nur eine Abbildungs-Optik vorgesehen sein.

Das System 50 umfasst weiter eine Berechnungseinrichtung 64, die im vorliegenden Ausführungsbeispiel separat von der Detektionseinrichtung 52 ausgebildet ist, und zwar als Teil einer Schweißstromquelle 66, mit der der Schweißbrenner 54 über ein Schlauchpaket 68 verbunden ist. Bei der Berechnungseinrichtung 64 kann es sich beispielsweise um eine bzw. um die Steuereinrichtung der Schweißstromquelle 66 handeln, die dazu eingerichtet ist, aus den von der Erfassungseinrichtung 60 erfassten Speckle-Mustern eine Schweißgeschwindigkeit zu bestimmen. Zu diesem Zweck ist im Schlauchpaket 68 vorzugsweise eine Datenleitung vorgesehen, über die Daten der von der Erfassungseinrichtung 60 erfassten Speckle-Muster an die Schweißstromquelle 66 und damit an die Berechnungseinrichtung 64 übertragen werden können.

Die von der Erfassungseinrichtung 60 erfassten Speckle-Muster werden im Betrieb an die Schweißstromquelle 66 übermittelt und durch die Berechnungseinrichtung 64 ausgewertet, um aus den nacheinander erfassten Speckle-Mustern eine Relativgeschwindigkeit zwischen der Detektionseinrichtung 52 und der Werkstückoberfläche 6 zu berechnen. Da die Detektionseinrichtung 52 als Aufsatz am Schweißbrenner 54 montiert ist, kann auf diese Weise die Schweißgeschwindigkeit berechnet werden, mit der der Schweißbrenner 54 relativ zur Werkstückoberfläche 6 bewegt wird.

Die von der Berechnungseinrichtung 64 berechnete Schweißgeschwindigkeit kann zum Beispiel zur Steuerung der Schweißstromquelle 66 verwendet werden. Beispielsweise kann die Leistungsabgabe an den Schweißbrenner 54 abhängig von der Schweißgeschwindigkeit gesteuert werden, um einen konstanten Energieeintrag pro Schweißnahtlänge in das Werkstück zu bewirken.

Bei einem alternativen Ausführungsbeispiel ist eine in den Aufsatz 52 integrierte Berechnungseinrichtung vorgesehen, beispielsweise ein digitaler Signalprozessor. In diesem Fall kann die von der Berechnungseinrichtung bestimmte Schweißgeschwindigkeit an die Schweißstromquelle 66 übertragen werden, vorzugsweise über eine in das Schlauchpaket 68 integrierte Datenleitung, so dass eine Steuereinrichtung der Schweißstromquelle 66 diese abhängig von der Schweißgeschwindigkeit steuern kann.

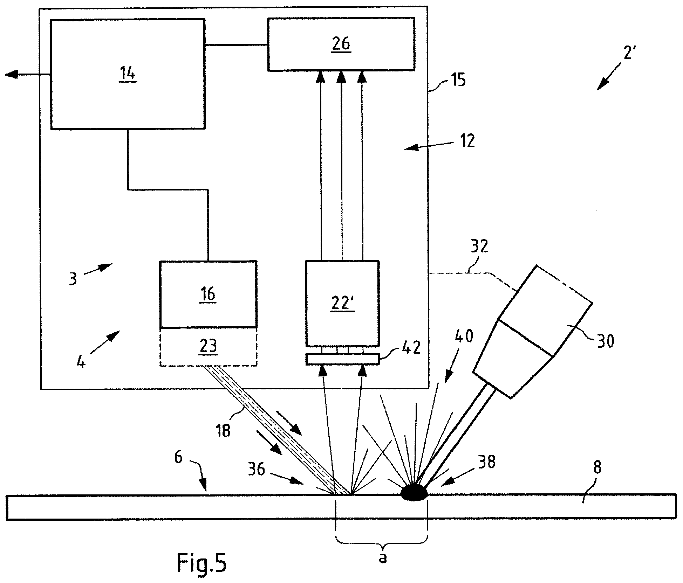

Fig. 5 zeigt weitere Ausführungsbeispiele des Systems und des Verfahrens. Das System 2' weist einen ähnlichen Aufbau auf wie das System 2 aus Fig. 1. Einander entsprechende Komponenten sind mit gleichen Bezugszeichen versehen.

Das System 2' unterscheidet sich dadurch vom System 2, dass der Strahlengang des Laserstrahls 18 zur Oberfläche 6 und des von der Oberfläche reflektierten Lichts zur Erfassungseinrichtung 12 voneinander getrennt sind. Die bei Reflektion des Laserstrahls 18 an der Oberfläche 6 entstehenden Speckle-Muster werden durch die Abbildungs-Optik 22' scharf auf den CCD-Sensor 26 der Erfassungseinrichtung 12 abgebildet. Zu diesem Zweck weist die Abbildungs-Optik 22' vorzugsweise eine Autofokus-Automatik auf.

Es kann eine zusätzliche Laser-Optik 23 für den Laserstrahl 18 vorgesehen sein. Die Laser-Optik 23 kann beispielsweise einstellbar ausgebildet sein, um die Position des Auftreffpunkts 36 des Laserstrahls auf der Werkstückoberfläche 6 relativ zu der mit dem Handgerät 30 bearbeiteten Schweiß- oder Lötposition 38 einstellen zu können.

Durch die Trennung der Strahlgänge des Laserstrahls 18 und des reflektierten Lichts vereinfacht sich der Aufbau des Systems 2'. Zudem können die jeweiligen Optiken 22' und 23 einfacher ausgestaltet werden.

## Patentansprüche

1. System (2, 50) zur Bestimmung einer Schweiß- oder Lötgeschwindigkeit,
- mit einem Gerät, insbesondere Handgerät (30, 54), zum Schweißen oder Löten, wobei das System (2, 50) eine Detektionseinrichtung (3, 52) aufweist, die an dem Gerät (30, 54) montiert oder in dieses integriert ist,
**dadurch gekennzeichnet**,
- dass die Detektionseinrichtung (3, 52) eine Beleuchtungseinrichtung (4, 58) aufweist, die zum Beleuchten einer Werkstückoberfläche (6) mit Licht (16) eingerichtet ist, das ausreichend kohärent ist, um Speckle-Muster (24) zu erzeugen, und
- dass die Detektionseinrichtung (3, 52) eine optische Erfassungseinrichtung (12, 60) aufweist, die dazu eingerichtet ist, Speckle-Muster (24) des von der Werkstückoberfläche (6) reflektierten Lichts zu erfassen, und
- dass das System (2, 50) eine Berechnungseinrichtung (14, 64) aufweist, die dazu eingerichtet ist, aus den erfassten Speckle-Mustern (24) eine Schweiß- oder Lötgeschwindigkeit zu bestimmen.

2. System nach Anspruch 1,
**dadurch gekennzeichnet, dass** die Beleuchtungseinrichtung (4, 58) zur Beleuchtung einer Werkstückoberfläche (6) mit Laserlicht (18) eingerichtet ist.

3. System nach Anspruch 1 oder 2,
**dadurch gekennzeichnet, dass** die Beleuchtungseinrichtung (4, 58) zur Beleuchtung einer Werkstückoberfläche (6) mit Licht (18) einer Wellenlänge im sichtbaren Bereich oder im an den sichtbaren Bereich angrenzenden Bereich, vorzugsweise im Bereich von 450 nm bis 680 nm, weiter bevorzugt von 500 bis 650 nm, eingerichtet ist.

4. System nach einem der Ansprüche 1 bis 3,
**dadurch gekennzeichnet, dass** die Detektionseinrichtung (3, 52) einen auf das Licht (18) der Beleuchtungseinrichtung (4, 58) abgestimmten und vor der Erfassungseinrichtung (12, 60) angeordneten Farbfilter (42) aufweist.

5. System nach einem der Ansprüche 1 bis 4,
**dadurch gekennzeichnet, dass** die Erfassungseinrichtung (12, 60) einen Bildsensor aufweist, insbesondere einen CCD-Sensor (26).

6. System nach einem der Ansprüche 1 bis 5,
**dadurch gekennzeichnet, dass** die Detektionseinrichtung (3, 52) eine Laser-Optik (22, 23, 62) aufweist, die dazu eingerichtet ist, die Position des Auftreffpunkts (36) des Lichts (18) auf der Werkstückoberfläche (6) einzustellen.

7. System nach einem der Ansprüche 1 bis 6,
**dadurch gekennzeichnet, dass** die Detektionseinrichtung (3, 52) eine Abbildungs-Optik (22, 22', 62) aufweist, die dazu eingerichtet ist, den von der Erfassungseinrichtung (12, 60) erfassten Bereich der Werkstückoberfläche (6) einzustellen.

8. System nach Anspruch 7,
**dadurch gekennzeichnet, dass** die Abbildungs-Optik (22, 22', 62) eine Autofokus-Automatik aufweist.

9. Verwendung eines Systems (2, 50) zum Bestimmen einer Schweiß- oder Lötgeschwindigkeit, wobei das System umfasst:
- eine Detektionseinrichtung (3, 52), eingerichtet zur Montage an oder zur Integration in ein Gerät, insbesondere Handgerät (30, 54), zum Schweißen oder Löten,
- wobei die Detektionseinrichtung (3, 52) eine Beleuchtungseinrichtung (4, 58) aufweist, die zum Beleuchten einer Werkstückoberfläche (6) mit Licht (16) eingerichtet ist, das ausreichend kohärent ist, um Speckle-Muster (24) zu erzeugen, und
- wobei die Detektionseinrichtung (3, 52) eine optische Erfassungseinrichtung (12, 60) aufweist, die dazu eingerichtet ist, Speckle-Muster (24) des von der Werkstückoberfläche (6) reflektierten Lichts zu erfassen, und
- eine Berechnungseinrichtung (14, 64), die dazu eingerichtet ist, aus den erfassten Speckle-Mustern (24) eine Schweiß- oder Lötgeschwindigkeit zu bestimmen.

10. Verfahren zur Bestimmung einer Schweiß- oder Lötgeschwindigkeit, insbesondere unter Verwendung eines Systems (2, 50) nach einem der Ansprüche 1 bis 9,
**dadurch gekennzeichnet,**
- **dass** eine Werkstückoberfläche (6) mit Licht (18) beleuchtet wird, das ausreichend kohärent ist, um Speckle-Muster (24) zu erzeugen,
- **dass** Speckle-Muster (24) des von der Werkstückoberfläche (6) zurückreflektierten Lichts erfasst werden und
- **dass** aus den erfassten Speckle-Mustern (24) eine Schweiß- oder Lötgeschwindigkeit berechnet wird.

11. Verfahren nach Anspruch 10,
**dadurch gekennzeichnet, dass** die Werkstückoberfläche (6) mit Laserlicht (18) beleuchtet wird.

12. Verfahren nach Anspruch 10 oder 11,
**dadurch gekennzeichnet, dass** die berechnete Schweiß- oder Lötgeschwindigkeit zur Steuerung eines Schweiß- bzw. Lötvorgangs verwendet wird.

## Claims

1. System (2, 50) for determining a welding or soldering speed,
- with an apparatus, in particular a hand-held apparatus (30, 54), for welding or soldering, wherein the system (2, 50) has a detection device (3, 52), which is mounted on the apparatus (30, 54) or integrated therein, characterised
- in that the detection device (3, 52) has an illuminating device (4, 58) configured to illuminate a workpiece surface (6) with light (16) which is sufficiently coherent to generate speckle patterns (24) and
- in that the detection device (3, 52) has an optical capture device (12, 60) configured to capture speckle patterns (24) of the light reflected from the workpiece surface (6) and
- in that the system (2, 50) has a calculation device (14, 64) configured to determine a welding or soldering speed from the captured speckle patterns (24).

2. System according to claim 1, **characterised in that** the illuminating device (4, 58) is configured to illuminate a workpiece surface (6) with laser light (18).

3. System according to claim 1 or 2, **characterised in that** the illuminating device (4, 58) is configured to illuminate a workpiece surface (6) with light (18) of a wavelength in the visible range or in the range adjoining the visible range, preferably in the range of 450 nm to 680 nm, more preferably of 500 to 650 nm.

4. System according to any one of claims 1 to 3, **characterised in that** the detection device (3, 52) has a colour filter (42) matched to the light (18) of the illuminating device (4, 58) and arranged before the capture device (12, 60).

5. System according to any one of claims 1 to 4, **characterised in that** the capture device (12 60) has an image sensor, in particular a CCD sensor (26).

6. System according to any one of claims 1 to 5, **characterised in that** the detection device (3, 52) has a laser optics (22, 23, 62) configured to set the position of the incidence point (36) of the light (18) on the workpiece surface (6).

7. System according to any one of claims 1 to 6, **characterised in that** the detection device (3, 52) has an imaging optics (22, 22', 62) configured to set the region of the workpiece surface (6) captured by the capture device (12, 60).

8. System according to claim 7, **characterised in that** the imaging optics (22, 22', 62) has an autofocus automation system.

9. Use of a system (2, 50) for determining a welding or soldering speed, wherein the system comprises:
- a detection device (3, 52) configured to be mounted on or integrated in an apparatus, in particular a hand-held apparatus (30, 54), for welding or soldering,
- wherein the detection device (3, 52) has an illuminating device (4, 58) configured to illuminate a workpiece surface (6) with light (16) which is sufficiently coherent to generate speckle patterns (24) and
- wherein the detection device (3, 52) has an optical capture device (12, 60) configured to capture speckle patterns (24) of the light reflected from the workpiece surface (6), and
- a calculation device (14, 64) configured to determine a welding or soldering speed from the captured speckle patterns (24).

10. Method for determining a welding or soldering speed, in particular using a system (2, 50) according to any one of claims 1 to 9, **characterised**
- **in that** a workpiece surface (6) is illuminated with light (18) which is sufficiently coherent to generate speckle patterns (24),
- **in that** speckle patterns (24) of the light reflected back from the workpiece surface (6) are captured and
- **in that** a welding or soldering speed is calculated from the captured speckle patterns (24).

11. Method according to claim 10, **characterised in that** the workpiece surface (6) is illuminated with laser light (18).

12. Method according to claim 10 or 11, **characterised in that** the calculated welding or soldering speed is used to control a welding or soldering process.

## Revendications

1. Système (2, 50) pour déterminer une vitesse de soudage ou de brasage,
- avec un appareil, en particulier un appareil à main (30, 54), pour souder ou braser,
- le système (2, 50) ayant un dispositif de détection (3, 52) monté au niveau de l'appareil (30, 54) ou intégré dans celui-ci,
**caractérisé**
- **en ce que** le dispositif de détection (3, 52) a un dispositif d'éclairage (4, 58) configuré pour éclairer une surface de pièce (6) avec de la lumière (16) qui est suffisamment cohérente pour produire des motifs tavelés (24), et
- **en ce que** le dispositif de détection (3, 52) a un dispositif de détection optique (12, 60) qui est conçu pour détecter des motifs tavelés (24) de la lumière réfléchie par la surface de la pièce (6), et
- **en ce que** le système (2, 50) a un dispositif de calcul (14, 64) qui est conçu pour déterminer une vitesse de soudage ou de brasage à partir des motifs tavelés (24) détectés.

2. Système selon la revendication 1,
**caractérisé en ce que** le dispositif d'éclairage (4, 58) est configuré pour éclairer une surface de pièce (6) avec une lumière laser (18).

3. Système selon la revendication 1 ou 2,
**caractérisé en ce que** le dispositif d'éclairage (4, 58) est configuré pour éclairer une surface de pièce (6) avec de la lumière (18) d'une longueur d'onde dans la plage visible ou dans la plage adjacente à la plage visible, de préférence dans la plage de 450 nm à 680 nm, plus préféré de 500 à 650 nm.

4. Système selon l'une des revendications 1 à 3,
**caractérisé en ce que** le dispositif de détection (3, 52) comporte un filtre de couleur (42) concordant avec la lumière (18) du dispositif d'éclairage (4, 58) et disposé en amont du dispositif de détection (12, 60).

5. Système selon l'une des revendications 1 à 4,
**caractérisé en ce que** le dispositif de détection (12, 60) comporte un capteur d'image, en particulier un capteur CCD (26).

6. Système selon l'une des revendications 1 à 5,
**caractérisé en ce que** le dispositif de détection (3, 52) a une optique laser (22, 23, 62) configurée pour ajuster la position du point de rencontre (36) de la lumière (18) sur la surface (6) de la pièce.

7. Système selon l'une des revendications 1 à 6,
**caractérisé en ce que** le dispositif de détection (3, 52) a une optique d'imagerie (22, 22', 62) configurée pour ajuster la zone de la surface de la pièce (6) détectée par le dispositif de détection (12, 60).

8. Système selon la revendication 7,
**caractérisé en ce que** l'optique d'imagerie (22, 22', 62) comporte un automatisme de mise au point automatique.

9. Utilisation d'un système (2, 50) pour déterminer une vitesse de soudage ou de brasage, le système comprenant :
- un dispositif de détection (3, 52) adapté pour être monté au niveau d'un appareil ou intégré dans un appareil, en particulier un appareil à main (30, 54), pour souder ou braser,
- le dispositif de détection (3, 52) ayant un dispositif d'éclairage (4, 58) configuré pour éclairer une surface de pièce (6) avec de la lumière (16) qui est suffisamment cohérente pour produire des motifs tavelés (24), et
- le moyen de détection (3, 52) ayant un dispositif de détection optique (12, 60) configuré pour détecter des motifs tavelés (24) de la lumière réfléchie par la surface de la pièce (6), et
- un dispositif de calcul (14, 64) configuré pour déterminer une vitesse de soudage ou de brasage à partir des motifs tavelés (24) détectés.

10. Procédé de détermination d'une vitesse de soudage ou de brasage, en particulier en utilisant un système (2, 50) selon l'une des revendications 1 à 9, **caractérisé**
- **en ce qu'**une surface de pièce (6) est éclairée avec de la lumière (18) qui est suffisamment cohérente pour générer des motifs tavelés (24),
- **en ce que** des motifs tavelés (24) de la lumière réfléchie par la surface de la pièce (6) sont détectés et
- **en ce qu'**une vitesse de soudage ou de brasage est calculée à partir des motifs tavelés (24) détectés.

11. Procédé selon la revendication 10,
**caractérisé en ce que** la surface de la pièce (6) est éclairée avec de la lumière laser (18).

12. Procédé selon la revendication 10 ou 11,
**caractérisé en ce que** la vitesse de soudage ou de brasage calculée est utilisée pour la commande d'une opération de soudage ou de brasage.
